# EUROPEAN PATENT SPECIFICATION

(11) **EP 2 876 132 B1**
(45) Date of publication and mention of the grant of the patent: **26.04.2017**
(21) Application number: 13193747.6
(22) Date of filing: 21.11.2013
(51) Int. Cl.: C08J 3/24, C08K 5/098, H01B 3/44

(54) **Crosslinkable polyethylene composition comprising a silanol condensation catalyst**
Vernetzbare Polyethylenzusammensetzung mit einem Silanolkondensationskatalysator
Composition de polyéthylène réticulable comprenant un catalyseur de condensation de silanol

(43) Date of publication of application: 27.05.2015
(73) Proprietor: Borealis AG, 1220 Vienna (AT)
(72) Inventor: Prieto, Oscar, 41672 Göteborg (SE); Anker, Martin, 42543 Hisings Kärra (SE); Fagrell, Ola, SE-444 45 Stenungsund (SE); Dahlen, Kristian, 44460 Stora Höga (SE); Hermansson, Åsa, 414 77 Göteborg (SE)
(74) Representative: Kador & Partner

(56) References cited:
- JP-A- 2012 197 404
- SEN, ACHINTYA KUMAR ET AL: "Kinetics of silane grafting and moisture crosslinking of", JOURNAL OF APPLIED POLYMER SCIENCE , 44(7), 1153-64 CODEN: JAPNAB; ISSN: 0021-8995, 1992, XP002719508, DOI: 10.1002/APP.1992.070440704

## Description

The present invention relates to a polyethylene composition comprising a crosslinkable polyethylene with hydrolysable silane groups and inorganic tin as a silanol condensation catalyst, and to a wire or cable, in particular a low, medium or high voltage power cable, comprising such a composition, and to the use of such a composition for the production of a wire or cable, suitable for a low, medium or high voltage cable.

It is known to cross-link polyethylene by means of additives as this improves several of the properties of the polyethylene, such as mechanical strength and chemical heat resistance. Crosslinking may be performed by condensation of silanol groups contained in the polyethylene which can be obtained by hydrolysation of silane groups. A silane compound may be introduced as a crosslinkable group into a polyethylene e.g. by grafting the silane compound onto the polyethylene, or by copolymerisation of olefin monomers and silane group containing monomers. Such techniques are known e.g. from US 4,413,066, US 4.297,310, US 4,351,876, US 4,397,981, US 4,446,283 and US 4,456,704.

In the present invention, the crosslinkable polyethylene composition is particularly used for the production of a wire or cable, in particular a low, medium or high voltage cable. Electric power cables for low voltages, i.e. voltages of below 6 kV, usually comprised of an electric conductor which is coated with an insulation layer. Such low voltage cables are also denoted as single wire cables. Optionally, two or more of such single wire cables are surrounded by a common outermost sheath layer, the jacket.

A typical medium voltage power cable, usually used for voltages from 6 to 36 kV, and a typical high voltage cable used for voltages higher than 36 kV, comprised of one or more conductors in a cable core that is surrounded by one or several layers of polymeric materials that can include, an inner semiconducting layer, followed by an insulating layer, and an outer semiconducting layer. These layers are normally crosslinked. To these layers, further layers may be added, such as a metallic tape or wire shield, and, finally, an outermost jacketing layer. The layers of the cable are based on different types of polymer compositions. As insulating materials, today crosslinked polyethylenes like crosslinked low density polyethylene are predominantly used.

For crosslinking of polyethylene containing hydrolysable silane groups, a silanol condensation catalyst must be used. Conventional catalysts are, for example, tin-, zinc-, iron-, lead- or cobalt compounds such as dibutyl tin dilaurate (DBTL), which is an organic tin. Another organic tin compound is dioctyl tin dilaurate (DOTL), described in EP2207845. Another example of condensation catalyst is described in JP2012197404. It discloses lower activity of inorganic tin catalyst when used alone on grafted materials and teach to use a co-catalyst. Organic tin is defined to have at least one covalent bond to a carbon atom.

However, it is known that organic tin has a negative impact on the natural environment when the cross-linked products, such as cables, are installed in the ground. Furthermore, it is also a hazardous material to work with.

Hence an object of the present invention is to provide a silanol condensation catalyst for a composition comprising a crosslinkable polyethylene with hydrolysable silane groups, that avoids the drawbacks of organic tin, i.e. which has less negative impact on natural environment and less hazardous to work with. At the same time, however, the composition should yield good or even improved cross-linking results, so that the properties of the final products comprising the cross-linked composition are similar or even improved over products in which DBTL was used as silanol condensation catalyst. In particular, it is an object to provide a low, medium or high voltage cable in which at least one layer, usually an insulating layer, has been crosslinked in the presence of a silanol condensation catalyst, and which cable shows even improved crosslinking properties.

It has now surprisingly been found that the above objects can be achieved by the use of a silanol condensation catalyst which is an inorganic tin, which has no covalent bond to a carbon atom.

The present invention therefore provides a crosslinkable polyethylene composition comprising
(A) a crosslinkable polyethylene with hydrolysable silane groups and
(B) at least one silanol condensation catalyst,
wherein the crosslinkable polyethylene comprises trimethoxy silane and/or triethoxy silane groups and the silanol condensation catalyst comprises an inorganic tin compound wherein a tin atom has no covalent bond to a carbon atom.

It has been found that in the composition according to the invention a cross-linking degree is obtained that is similar or even improved compared to an organic tin, like DOTL. Simultaneously, products comprising the composition have less negative impact on natural environment, and fewer restrictions apply for the production and handling of the composition due to the less hazardous silanol condensation catalyst.

In one embodiment of the invention the crosslinkable polyethylene composition has the silanol condensation catalyst of the following formula

[R¹O]Sn[OR²] (I)

wherein R¹ and R² independently have at most 30 carbon atoms.

In a further embodiment the silanol condensation catalyst has the following formula

[R¹COO]Sn[OOCR²] (II)

wherein Sn has an oxidation number of 2+.

In one embodiment of the silanol condensation catalyst (B), in formula (I) or (II), R¹ and R² independently are alkyl groups, which may be linear or branched. In one embodiment are R¹ and R² the same.

Furthermore, in formula (I) or (II), suitably R¹ and R² independently have at least 2 carbon atoms, more suitably R¹ and R² independently have at the most 20 carbon atoms.

Still more suitable, in formula (I) or (II), R¹ and R² independently have at most 18 carbon atoms and still have at least 8 carbon atoms.

R¹ and R² may comprise double and/or triple bonds and may include heteroatoms.

According to an embodiment of the present invention, the crosslinkable polyethylene composition comprises a mixture of silanol condensation catalysts according to formula (I) and/or formula (II).

In the yet another embodiment of the invention the silanol condensation catalysts is selected from (list of silanol condensation catalysts).

| Name | CAS Registry Number |
|---|---|
| Tin (II) 2-ethylhexanoate | 301-10-0 |
| Tin (II) acetate | 638-39-1 |
| Tin (II) tartrate | 815-85-0 |
| Tin (II) octoate | 1912-83-0 |
| Tin (II) Oleate | 1912-84-1 |
| Tin (II) stearate | 6994-59-8 |
| Tin (II) stearate | 7637-13-0 |
| Tin (II) ethoxide | 14791-99-2 |
| Tin (II) laurate | 14974-55-1 |
| Tin (II) acetylacetonate | 16009-86-2 |
| Tin (II) hexadecanoate | 35104-88-2 |
| Tin (II) Gluconic acid | 35984-19-1 |
| Tin (II) neodecanoate | 49556-16-3 |
| Tin (II) hexafluoroacetylacetonate | 51319-99-4 |
| Tin (II) oxalate | 814-94-8 |

In one embodiment of the invention only one silanol condensation catalyst (B) is required. This simplifies the composition and consequently makes the invention more robust. Simplification is one category of inventions that are underestimated or even neglected. This should be one of the most appreciated categories of inventions since it will make technology more available, useful and reliable. Problems with crosslinking are one of the most common problems for crosslinked cables.

The silanol condensation catalyst (B) according to one embodiment comprises only of one silanol condensation catalyst either according to formula (I) or from the list of the silanol condensation catalysts, in another embodiment only from the list of the silanol condensation catalysts.

In one embodiment of the invention the silanol condensation catalyst (B) is present in an amount of 0.0001 to 6 wt.%, more suitable of 0.001 to 2 wt.%, and most suitable 0.02 to 0.5 wt.%.

The hydrolysable silane groups may be introduced into the polyethylene by copolymerisation of e.g. ethylene monomers with silane group containing comonomer(s) or by grafting, i.e. by chemical modification of the polymer by addition of silane groups mostly in a radical reaction. Grafting is commonly used and the polymers are widely spread.

The silane group containing polyethylene can be obtained by the following unsaturated silanes. The unsaturated silane compound represented by the formula

R¹SiR²_{q}Y₃ (II)

wherein
R¹ is an ethylenically unsaturated hydrocarbyl, hydrocarbyloxy or (meth)acryloxy hydrocarbyl group,
R² is an aliphatic saturated hydrocarbyl group,
Y which may be the same or different, is a hydrolysable organic group.

Special examples of the unsaturated silane compound are those wherein R¹ is vinyl, allyl, isopropenyl, butenyl, cyclohexanyl or gamma-(meth) acryloxy propyl; Y is methoxy, ethoxy.

One embodiment of the invention is copolymerising the ethylene with vinyl triethoxy silane and/or vinyl trimethoxy silane in a high pressure radical process. One special feature with this embodiment is that no spacer is present between the carbon backbone of the polymer and the silane triethoxy group and/or silane trimethoxy group, i.e. the silane atom directly is bonded to the polymer backbone. The inorganic tin catalyst is a stronger condensation catalyst for copolymerised polymers of ethylene and unsaturated silane groups compared to if the unsaturated silane groups are grafted. This is a surprising effect, since the stereochemistry for a copolymerised polymer is much more restricted due to lack of spacers, in other words the silane group is more hindered. Therefore positioning the condensation catalyst in the correct position should be more difficult. That would result in lower activity of the condensation catalyst. Meaning that less silane groups would condensate and final crosslinking level would be lower. In all grafted systems it will be at least 2 carbon atoms between the carbon backbone chain and the silane groups (spacers).

The embodiment of copolymerisation is an alternative and more efficient solution to make a crosslinked article with a silane containing polyethylene that is crosslinked, has less negative impact on natural environment and that is more efficient than conventional techniques such as silane grafted polyethylene with a condensation catalyst of organic tin.

Other benefits of copolymerisation are that no polar peroxide residues or unreacted vinyl silanes are present in the final article. This will make the final product more uniform and improve quality. Storage stability of the copolymerised ethylene with vinyl triethoxy silane and/or vinyl trimethoxy silane made in a high pressure radical process is greatly improved compared to grafted solutions. Another benefit is less handling liquid vinyl silanes which are flammable and have a strong odour. Further benefits are less scrape, less scorch (premature crosslinking in extruder) and longer production runs (less cleaning of extruders).A preferred unsaturated silane compound is represented by the formula

CH₂=CHSi(OA)₃ (III)

wherein A is a hydrocarbyl group having 1-2 carbon atoms.

The most preferred compounds are vinyl trimethoxy silane, vinyl triethoxy silane and/or combinations thereof.

The copolymerisation of the olefin, e.g. ethylene, and the unsaturated silane compound may be carried out under any suitable conditions resulting in the copolymerisation of the two monomers.

The silane group containing polyethylene (A) contains 0.001 to 15 wt.% of the silane group containing monomers, more suitable 0.01 to 5 wt.%, and most suitable 0.1 to 3 wt.%, and most suitable 0.1 to 2 wt.%.

In one embodiment of the invention the composition comprises a polyethylene with polar group containing monomer units.

The polar groups can be selected from siloxane, amide, anhydride, carboxylic, carbonyl, hydroxyl, ester and epoxy groups.

The polar groups may for example be introduced into the polymer by grafting of an ethylene polymer with a polar-group containing compound, i.e. by chemical modification of the polyethylene by addition of a polar group containing compound mostly in a radical reaction. Grafting is e.g. described in US 3,646,155 and US 4,117,195.

In one embodiment are said polar groups introduced into the polymer by copolymerisation of ethylene monomers with comonomers bearing polar groups. Such terpolymer is e.g. described in EP2074172.

As examples of comonomers having polar groups may be mentioned the following: (a) vinyl carboxylate esters, such as vinyl acetate and vinyl pivalate, (b) (meth)acrylates, such as methyl(meth)acrylate, ethyl(meth)acrylate, butyl(meth)acrylate and hydroxyethyl(meth)acrylate, (c) olefinically unsaturated carboxylic acids, such as (meth)acrylic acid, maelic acid and fumaric acid, (d) (meth)acrylic acid derivatives, such as (meth)acrylonitrile and (meth)acrylic amide, and (e) vinyl ethers, such as vinyl methyl ether and vinyl phenyl ether.

One embodiment are using comonomers, vinyl esters of monocarboxylic acids having 1 to 4 carbon atoms, such as vinyl acetate, and (meth)acrylates of alcohols having 1 to 4 carbon atoms, such as methyl (meth)acrylate. Especially suitable comonomers are butyl acrylate, ethyl acrylate and methyl acrylate. Two or more such olefinically unsaturated compounds may be used in combination. The term "(meth)acrylic acid" is intended to embrace both acrylic acid and methacrylic acid.

Suitably the polar group containing monomer units are selected from the group of acrylates.

The amount of polar group containing monomer units in the polyethylene is 40 wt.% or less, in another embodiment 35 wt.% or less, and in yet another embodiment between 1 and 20 wt.%.

In a particularly embodiment, the crosslinkable polyethylene with hydrolysable silane groups (A) at the same time also contains the polar groups in any of the embodiments as described hereinbefore, i.e. the polyethylene is a terpolymer containing both the silane groups and the polar groups.

Furthermore, the amounts for the silane group and the polar group containing monomers as described above apply for the terpolymer.

Such terpolymers may be produced by grafting, or, by copolymerisation of olefin monomers and unsaturated monomers containing silane groups and polar groups.

The polymer composition according to the invention may further contain various additives, such as miscible thermoplastics, antioxidants, further stabilizers e.g. water tree retardants, scorch retardants, lubricants, fillers, carbon black, colouring agents and foaming agents.

The total amount of additives is generally 0.3 to 10 wt.%, or suitable 1 to 7 wt.%, or more suitable 1 to 5 wt.%.

The silanol condensation catalyst (B) usually is added to the crosslinkable polyethylene composition by compounding with a so-called master batch, in which the catalyst, and optionally further additives are contained in a polymer, e.g. polyolefin, matrix in concentrated form.

The silanol condensation catalyst master batch according to the invention comprise a polyolefin matrix polymer (C) in an amount of 50 wt.% or more and an inorganic tin compound (B) in which a tin atom has no covalent bond to a carbon atom. In one embodiment is only one silanol condensation catalyst according to the invention added in to the master batch. This simplifies the compounding process and minimizes chance for errors.

Accordingly, the present invention also pertains to a master batch for a crosslinkable polyolefin composition comprising a matrix polymer and a silanol condensation catalyst (B) in any of the above described embodiments.

The matrix polymer can be a polyolefin, more suitable a polyethylene, which may be a homo- or copolymer of ethylene, e.g. low density polyethylene, or polyethylene-methyl-, -ethyl, or -butyl-acrylate copolymer containing 1 to 50 wt.% of the acrylate, and mixtures thereof.

As stated, in the master batch the compounds to be added to the silane group containing polyethylene are contained in concentrated form, i.e. in a much higher amount than in the final composition.

The master batch can comprises component (B) in an amount of from 0.3 to 15 wt%, more suitably from 0.7 to 10 wt%.

Furthermore, can the master batch also contains some or all of the additives, for example the stabilizers.

The amount of the stabilizers contained in the master batch can be up to 10 wt%.

The master batch is compounded with the silane group containing polymer in an amount of from 1 to 10 wt%, more suitably from 2 to 8 wt%.

Compounding may be performed by any known compounding process, including extruding the final product with a screw extruder or a kneader.

One embodiment of the invention relates to a process for adding a liquid silanol condensation catalyst to an extruder comprising
- feeding the extruder with a crosslinkable polyethylene with hydrolysable silane groups and add the inorganic tin silanol condensation catalyst as liquid by direct injection to the extruder,
- or mix the liquid silanol condensation catalyst with the polyethylene with hydrolysable silane groups and feed the mixture to the extruder
- such as a cable extruder
- extrude said compound of the crosslinkable polyethylene composition with hydrolysable silane groups and the liquid inorganic tin condensation catalyst to form an article and crosslink said article.

The present invention furthermore relates to a wire or cable, in particular a low, medium or high voltage cable, comprising the polyethylene composition in any of the above described embodiments. The cable can be a power cable.

In a preferred embodiment of the invention relates to a low voltage cable comprising one or more conductors in a cable core, an insulating layer, possibly a jacket layer wherein at least one of these layers, suitably the insulating layer, comprises the polyethylene composition as described above.

Insulating layers for low voltage power cables generally have a thickness of at least 0.4 mm, typically 1mm to 2.3 mm, and the thickness increases with increasing voltage the cable is designed for.

Usually, the cable is produced by co-extrusion of the different layers onto the conducting core. Then, crosslinking is performed by moisture curing, wherein in the presence of the silanol condensation catalyst the silane groups are hydrolysed under the influence of water or steam, resulting in the splitting off of alcohol and the formation of silanol groups, which are then crosslinked in a condensation reaction wherein water is split off.

The crosslinking can be performed in ambient conditions or more suitable in steam, sauna or water bath conditions at a temperature of 70 to 100°C,

In one embodiment of the invention the polyethylene composition is fully crosslinked. The definition of crosslinked is defined as a hot set after 24h in 90°C water bath of an elongation of less than 175% or suitable 100% and/or a gel content of more than 70% or, suitable of more than 80%. This embodiment is applicable in any of the above described embodiments.

The invention relates furthermore to the use of the polyethylene composition in any of the above described embodiments for the production of a layer of a wire or cable. The invention is suitable for an insulating layer, of a low voltage cable.

The following examples serve to further illustrate the present invention.

### Examples

### Test methods

### 1. Measurement Methods

### a) Melt Flow Rate:

The melt flow rate MFR2 was measured in accordance with ISO 1133 at 190°C and a load of 2.16 kg for ethylene homo and copolymers.

### b) Density:

The density was measured according to ISO 1183D and ISO1872-2 for sample preparation.

### c) Comonomer content:

Content (mol-%) of functional silane-moieties (Si(Y)3-q) using X-ray fluorescence analysis: The pellet sample was pressed to a 3 mm thick plaque (150°C for 2 minutes, under pressure of 5 bar and cooled to room temperature). Si-atom content was analysed by XRF, PW480/10 (supplied by Phillips). The XRF results show the total content (wt%) of Si and are then calculated and expressed herein as Mol %-Content of functional silane-moieties (Si(Y)3-q).

Content (wt% and mol%) of polar comonomer: Comonomer content (wt%) of the polar comonomer was determined in a known manner based on Fourier transform infrared spectroscopy (FTIR) determination calibrated with 13C-NMR as described in Haslam J, Willis HA, Squirrel DC. Identification and analysis of plastics, 2nd ed. London Iliffe books; 1972. FTIR instrument was a Perkin Elmer 2000, 1scann, resolution 4cm-1. The peak for the used comonomer was compared to the peak of polyethylene as evident for a skilled person (e.g. the peak for butyl acrylate at 3450 cm-1 was compared to the peak of polyethylene at 2020 cm-1). The weight-% was converted to mol-% by calculation based on the total moles of polymerisable monomers.

An alternative method to determine silane and polar comonomer content: is to use NMR -method which would give equal results to above X-ray and FTIR method, i.e. results would be comparable to purposes of the invention: Comonomer Content (NMR): The comonomer content was determined by using 13C -NMR. The 13C - NMR spectra were recorded on Bruker 400 MHz spectrometer at 130 °C from samples dissolved in 1,2,4-trichlorobenzene/benzene-d6 (90/10 w/w).
d) Hot set elongation (%): To determine that the crosslinkable polyethylene composition are properly cured the hot set elongation and permanent set are determined according to IEC 60811-2-1, by measuring thermal deformation at 200°C and at a load of 0.2 MPa is used. Three dumb-bell test samples are prepared from a tape consisting of a polyethylene composition to be tested by cutting test samples from the tape. Each test sample is fixed vertically from upper end thereof in the oven and the load of 0.2 MPa are attached to the lower end of each test layer sample. After 15 min, 200°C in oven the distance between the premarked lines is measured and the percentage hot set elongation calculated, elongation %. For permanent set %, the tensile force (weight) is removed from the test samples and after recovered in 200°C for 5 minutes and then let to cool in room temperature to ambient temperature. The permanent set % is calculated from the distance between the marked lines.
e) Gel content (wt%): is measured according to ASTM D2765-90 using a sample consisting of said silane-crosslinked polyolefin composition of the invention

### Sample preparation:

Catalyst master batches were compounded in a Brabender and pelletized.
Compositions are made according to the table below.

1.8 mm thick tapes consisting of 95% of EVS (1.3wt%) and 5% of the catalyst masterbatch were extruded for hot set measurements. The tapes were shaped into dog bones and crosslinked for 24 hours in 90 °C water bath before their hot set were determined.
EVS (1.3wt%): VTMS-ethylene copolymer produced by a high-pressure polymerisation with free radical initiation, where ethylene monomers were reacted with vinyl trimethoxy silane (VTMS) amounts so as to yield 1,3 wt% silane content in the copolymer. The melt flow rate (MFR2@190°C) according to ISO 1133 (190°C, 2.16 kg) which is 1g/10 min
EBA (17wt%): Ethylene butyl acrylate (EBA) copolymer, having a melt flow rate (MFR2@190°C) according to ISO 1133 (190°C, 2.16 kg) which is 7g/10 min and the content of butyl acrylate which is 17wt% with regard to the total amount of monomers for the EBA. The saturated polyethylene was prepared by a high pressure polymerisation process.

Tin(II)Oleate, CAS registry number 1912-84-1:

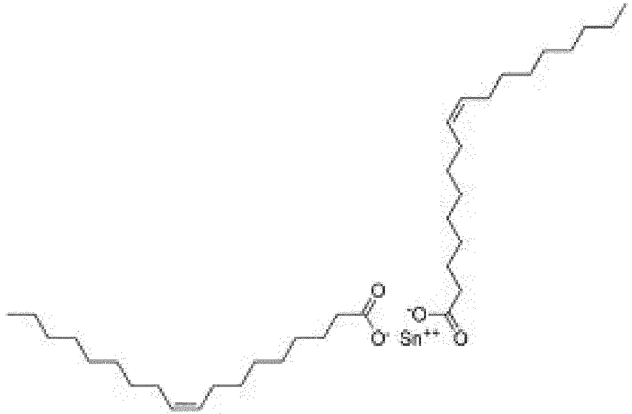

Bis(2-ethylhexanoate)tin, CAS registry number 301-10-0:

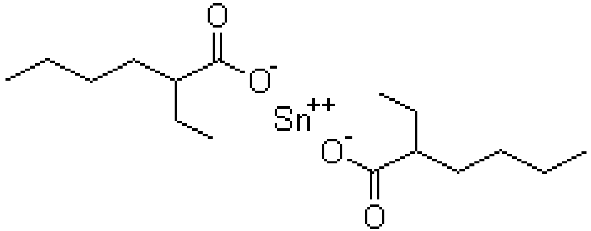

Dioctyltin dilaurate (DOTL) CAS registry number 3638-18-8.

**Table 1**

| **Formulation of catalyst MB** | **Ref. DOTL** | **Inv. 1, Tin(II)Oleate** | **Inv. 2, Bis(2-ethylhexanoate )tin** |
|---|---|---|---|
| **Component** | [wt%] | [wt%] | [wt%] |
| EBA (17wt%) | 96,5 | 96 | 97 |
| Catalyst | 3,5 | 4 | 3 |

| **Tape extrusion (1,8 mm thick tape)** | | | |
|---|---|---|---|
| Heat profile | 150/160/170° C | 150/160/170°C | 150/160/170°C |
| Screw speed | 50 rpm | 50 rpm | 50 rpm |
| Base resin | EVS(1.3wt%) | EVS(1.3wt%) | EVS(1.3wt%) |
| Tape quality | Good | Good | Good |

| **Hot set after 24h in 90°C water bath** | | | |
|---|---|---|---|
| Hot Set Elongation (%) | 37 | 31 | 28 |
| Permanent Hot Set deformation (%) | 0 | 2 | 0 |
| Gel content (%) | 73 | 81 | 81 |

Table 1 shows the masterbatch formulations, tape extrusion conditions and results from hot set experiment for two inorganic tin (II) salts and the DOTL reference. The hotset elongation of the inorganic tin condensation catalysts are better than the organic tin condensation catalyst.

The crosslinking condition is selected to complete the silanol condensation reaction, i.e. the hot set elongation will not change by prolonging the water bath at 90°C. This is interpreted as that DOTL can condensate enough silane groups to get a hotset of 73%, which is seen as complete crosslinking. The inorganic condensation catalyst can condensate even more silane groups to achieve a better hot set level. The gel content evaluation gives the same result.

Tape quality is visually inspected for gels and other deformations, i.e. premature crosslinking.

## Claims

1. A crosslinkable polyethylene composition comprising
(A) a crosslinkable polyethylene with hydrolysable silane groups and
(B) at least one silanol condensation catalyst,
wherein the crosslinkable polyethylene comprises trimethoxy silane and/or triethoxy silane groups, the silanol condensation catalyst comprises an inorganic tin compound in which a tin atom has no covalent bond to a carbon atom, wherein the crosslinkable polyethylene is made in a high pressure radical process with vinyl trimethoxy silane and/or vinyl triethoxy silane as copolymer and wherein the trimethoxy silane and/or triethoxy silane groups are directly attached on the polymer backbone without any spacer.

2. Crosslinkable polyethylene composition according to claim 1 wherein the silanol condensation catalyst has a formula
[R¹O]Sn[OR²] (I)
wherein R¹ and R² independently have at most 30 carbon atoms.

3. Crosslinkable polyethylene composition according to claim 2 wherein the silanol condensation catalyst has a formula
[R¹COO]Sn[OOCR²] (II)
wherein Sn has an oxidation number of 2+.

4. Crosslinkable polyethylene composition according to any of the preceding claims wherein the condensation ^{c}atalyst is selected from Tin (I^{I}) 2-ethylhexanoate (301-10-0), Tin (II) acetate (638-39-1), Tin (II) tartrate (815-85-0), Tin (II) octoate (1912-83-0), Tin (II) Oleate (1912-84-1), Tin (II) Stearate (6994-59-8), Tin (II) Stearate (7637-13-0), Tin (II) ethoxide (14791-99-2), Tin (II) laurate (14974-55-1), Tin (II) acetylacetonate (16009-86-2), Tin (II) hexadecanoate (35104-88-2), Tin (II) Gluconic acid (35984-19-1), Tin (II) neodecanoate (49556-16-3), Tin (II) hexafluoroacetylacetonate, (51319-99-4) and Tin (II) oxalate (814-94-8).

5. Crosslinkable polyethylene composition according to any of the preceding claims wherein the silanol condensation catalyst (B) comprises only of one silanol condensation catalyst.

6. Crosslinkable polyethylene composition according to any of the preceding claims wherein in the crosslinkable polyethylene with hydrolysable silane groups (A) the silane groups are present in an amount of 0.1 to 3wt% of component (A).

7. Crosslinkable polyethylene composition according to any of the preceding claims wherein the crosslinkable polyethylene with hydrolysable silane groups (A) is a terpolymer comprising also polar groups.

8. Crosslinkable polyethylene composition according to any of the preceding claims wherein the at least one silanol condensation catalyst is compounded in a master batch comprising
(C) a polyolefin matrix polymer in an amount of 50 wt.% or more..

9. Crosslinkable polyethylene composition according to claim 8 wherein the master batch only comprises one silanol condensation catalyst.

10. A cable comprising a layer made of a crosslinkable polyethylene composition according to any of claims 1 to 9.

11. Cable according to claim 10 which is a low, medium or high voltage power cable.

12. Cable according to claim 10 or 11 wherein at least the insulating layer is made of a polyethylene composition according to any of claims 1 to 9.

## Patentansprüche

1. Vernetzbare Polyethylenzusammensetzung, umfassend
(A) ein vernetzbares Polyethylen mit hydrolysierbaren Silangruppen und
(B) mindestens einen Silanol-Kondensationskatalysator,
wobei das vernetzbare Polyethylen Trimethoxysilan- und/oder Triethoxysilangruppen umfasst, der Silanol-Kondensationskatalysator eine anorganische Zinnverbindung umfasst, in der ein Zinnatom keine kovalente Bindung zu einem Kohlenstoffatom aufweist, wobei das vernetzbare Polyethylen in einem radikalischen Hochdruckverfahren mit Vinyltri-methoxysilan und/oder Vinyltriethoxysilan als Copolymer hergestellt wird und wobei die Trimethoxysilan- und/oder Triethoxysilangruppen direkt an das Polymerrückgrat ohne jeglichen Abstandhalter befestigt sind.

2. Vernetzbare Polyethylenzusammensetzung nach Anspruch 1, wobei der Silanol-Kondensationskatalysator eine Formel
[R¹O]Sn[OR²] (I)
aufweist,
wobei R¹ und R² unabhängig höchstens 30 Kohlenstoffatome aufweisen.

3. Vernetzbare Polyethylenzusammensetzung nach Anspruch 2, wobei der Silanol-Kondensationskatalysator eine Formel
[R¹COO]Sn[OOCR²] (II)
aufweist,
wobei Sn eine Oxidationszahl von 2+ hat.

4. Vernetzbare Polyethylenzusammensetzung nach einem der vorhergehenden Ansprüche, wobei der Kondensationskatalysator aus Zinn(II)-2-ethylhexanoat (301-10-0), Zinn(II)acetat (638-39-1), Zinn(II)tartrat (815-85-0), Zinn(II)octoat (1912-83-0), Zinn(II)oleate (1912-84-1), Zinn(II)stearat (6994-59-8), Zinn(II)stearat (7637-13-0), Zinn(II)ethoxid (14791-99-2), Zinn(II)laurat(14974-55-1), Zinn(II)acetylacetonat (16009-86-2), Zinn(II)hexadecanoat (35104-88-2), Zinn(II)gluconsäure (35984-19-1), Zinn(II)neodecanoat (49556-16-3), Zinn(II)hexafluoracetylacetonat (51319-99-4) und Zinn(II)oxalat (814-94-8) oder Mischungen davon ausgewählt ist.

5. Vernetzbare Polyethylenzusammensetzung nach einem der vorhergehenden Ansprüche, wobei der Silanol-Kondensationskatalysator (B) nur aus einem Silanol-Kondensationskatalysator gebildet wird.

6. Vernetzbare Polyethylenzusammensetzung nach einem der vorhergehenden Ansprüche, wobei in dem vernetzbaren Polyethylen mit hydrolysierbaren Silangruppen (A) die Silangruppen mit einer Menge von 0,1 bis 3 Gew.-% von der Komponente (A) vorliegen.

7. Vernetzbare Polyethylenzusammensetzung nach einem der vorhergehenden Ansprüche, wobei das vernetzbare Polyethylen mit hydrolysierbaren Silangruppen (A) ein Terpolymer ist, das auch polare Gruppen umfasst.

8. Vernetzbare Polyethylenzusammensetzung nach einem der vorhergehenden Ansprüche, wobei der mindestens eine Silanol-Kondensationskatalysator in ein Masterbatch compoundiert wird, das (C) ein Polyolefinmatrixpolymer mit einer Menge von 50 Gew.-% oder mehr umfasst.

9. Vernetzbare Polyethylenzusammensetzung nach Anspruch 8, wobei das Masterbatch nur einen Silanol-Kondensationskatalysator umfasst.

10. Kabel, umfassend eine Schicht, die aus einer vernetzbaren Polyethylenzusammensetzung nach einem der Ansprüche 1 bis 9 hergestellt ist.

11. Kabel nach Anspruch 10, das ein Nieder-, Mittel- oder Hochspannungsenergiekabel ist.

12. Kabel nach Anspruch 10 oder 11, wobei mindestens die Isolierschicht aus einer Polyethylenzusammensetzung nach einem der Ansprüche 1 bis 9 hergestellt ist.

## Revendications

1. Composition de polyéthylène réticulable, comprenant
(A) un polyéthylène réticulable ayant des groupes silane hydrolysables, et
(B) au moins un catalyseur de condensation du silanol,
dans laquelle le polyéthylène réticulable comprend des groupes triméthoxysilane et/ou triéthoxysilane, le catalyseur de condensation du silanol comprend un composé inorganique de l'étain, dans lequel un atome d'étain n'a pas de liaison covalente à un atome de carbone, le polyéthylène réticulable étant fabriqué dans un procédé radicalaire sous haute pression avec du triméthoxysilane et/ou du vinyltriéthoxysilane en tant que comonomère, et les groupes triméthoxysilane et/ou triéthoxysilane étant directement attachés au squelette polymère sans aucun espaceur.

2. Composition de polyéthylène réticulable selon la revendication 1, dans laquelle le catalyseur de condensation du silanol a la formule
[R¹O]Sn[OR²] (I)
dans laquelle R¹ et R² ont, d'une manière indépendante, au plus 30 atomes de carbone.

3. Composition de polyéthylène réticulable selon la revendication 2, dans laquelle le catalyseur de condensation du silanol a la formule
[R¹COO]Sn[OOCR²] (II)
dans laquelle Sn a un nombre d'oxydation de 2+.

4. Composition de polyéthylène réticulable selon l'une quelconque des revendications précédentes, dans laquelle le catalyseur de condensation est choisi parmi le 2-éthylhexanoate d'étain(II) (301-10-0), l'acétate d'étain(II) (638-39-1), le tartrate d'étain(II) (815-85-0), l'octanoate d'étain(II) (1912-83-0), l'oléate d'étain(II) (1912-84-1), le stéarate d'étain(II) (6994-59-8), le stéarate d'étain(II) (7637-13-0), l'éthoxyde d'étain(II) (14791-99-2), le laurate d'étain(II) (14974-55-1), l'acétylacétonate d'étain(II) (16009-86-2), l'hexadécanoate d'étain(II) (35104-88-2), le gluconate d'étain(II) (35984-19-1), le néodécanoate d'étain(II) (49556-16-3), l'hexafluoroacétylacétonate d'étain(II) (51319-99-4) et l'oxalate d'étain(II) (814-94-8).

5. Composition de polyéthylène réticulable selon l'une quelconque des revendications précédentes, dans laquelle le catalyseur de condensation du silanol (B) ne comprend qu'un catalyseur de condensation du silanol.

6. Composition de polyéthylène réticulable selon l'une quelconque des revendications précédentes, dans laquelle, dans le polyéthylène réticulable ayant des groupes silane hydrolysables (A), les groupes silane sont présents en une quantité de 0,1 à 3 % en poids par rapport au composant (A).

7. Composition de polyéthylène réticulable selon l'une quelconque des revendications précédentes, dans laquelle le polyéthylène réticulable ayant des groupes silane hydrolysables (A) est un terpolymère comprenant aussi des groupes polaires.

8. Composition de polyéthylène réticulable selon l'une quelconque des revendications précédentes, dans laquelle l'au moins un catalyseur de condensation du silanol est mélangé dans un mélange maître comprenant (C) un polymère à matrice de polyoléfine en une quantité de 50 % en poids ou plus.

9. Composition de polyéthylène réticulable selon la revendication 8, dans laquelle le mélange maître ne comprend qu'un catalyseur de condensation du silanol.

10. Câble comprenant une couche fabriquée en une composition de polyéthylène réticulable selon l'une quelconque des revendications 1 à 9.

11. Câble selon la revendication 10, qui est un câble de puissance basse tension, moyenne tension ou haute tension.

12. Câble selon la revendication 10 ou 11, dans lequel au moins la couche isolante est fabriquée en une composition de polyéthylène selon l'une quelconque des revendications 1 à 9.
